# EUROPEAN PATENT APPLICATION

(11) **EP 0 787 653 A1**
(43) Date of publication of application: **06.08.1997**
(21) Application number: 96500014.4
(22) Date of filing: 02.02.1996
(51) Int. Cl.: B65B 25/04, B65B 1/32, G01G 19/393

(54) **Automatic bulk fruit package weighing filling machine**

(71) Applicant: FOOD MACHINERY ESPANOLA S.A., E-46012 Valencia (ES)
(72) Inventor: Sanchez de Leon Rodriguez Roda, Juan Antonio, E-46012 Valencia (ES)
(74) Representative: Blumbach, Kramer & Partner

(57) **Abstract**

The object of the Patent is an automatic bulk fruit package weighing-filling machine devised and designed to fill packages with the programmed weight, within as little time as possible and with an even distribution of the bulk fruits within the package.

Accurate and speedy filling is achieved by feeding the fruits into the package using three parallel conveyor belts, the two end conveyors stopping when the maximum weight is about to be achieved and the central conveyor continuing its accurate feeding until the weight is completed.

Even distribution of the fruits inside the package is achieved by causing the package to make various equal forward movements, whilst being filled and weighed.

## Description

### OBJECT

The invention subject of this Patent application comprises an **automatic bulk fruit package weighing-filling machine**.

These machines are specifically useful in processing Sheds where the fruits undergo preparatory operations to be later marketed (namely washing; brushing, polishing, labelling, packaging, etc.).

### BACKGROUND OF THE INVENTION

Automatic bulk fruit packaging is a known operation that is carried out positioning an empty package (to be filled) on a plane below the continuous feeding means (for instance conveyor belts) from which the fruits drop into the package until the weight the package must contain is reached.

In the filling position, the empty package lies on an automatic weighing member (usually a load cell) which records the successive weights, orders feeding to stop when the maximum programmed weight is reached, the full package to leave the loading and weighing area and the next empty package to enter such area for the operating cycle to recommence.

The above-described process does not however afford fully satisfactory results, and the following problems arise:
- Timing of package filling and an accurate weight of the fruits contained in the package with respect to the maximum programmed weight is somewhat incompatible.

Indeed, a quick feeding is difficult to stop readily and therefore an excess of fruits can easily drop into the package by inertia, thereby exceeding the tolerance limits, particularly when working with fruits of some weight and size; a slow feeding favouring an accurate weighing of the fruits contained in the package when filling is over may however result in process duration being excessive and the investment in machinery required to carry it out automatically scarcely profitable.
- On the other hand, holding the package still whilst it is being filled results in a piling of the fruits that drop into it, which requires their manual redistribution before closing the package to be shipped.

### DESCRIPTION OF THE INVENTION

The aim of the invention subject of this Patent application is to eliminate the disadvantages typical of the above-described known process, having been devised and designed bearing such objective in mind.

The structure of said object has therefore been changed and its operational characteristics consequently improved, converting it into a substantially different object.

First of all, feeding has been divided into three separate parts (for instance, three conveyor belts) diversifying their functions and specialising their respective applications.

Indeed, when filling of a package begins, the three feedings means work simultaneously until a weight value is achieved for the fruits contained lying close to the maximum programmed value.

Two of the three feedings means then stop moving (for instance the two end conveyors of three parallel conveyors) and only one remains operational, with a view to completing the programmed weight with the required precision.

The new filling process thus renders an acceptable loading speed compatible with a precision of the weight contained in the package, within set tolerances.

The problem of uneven distribution of bulk fruits within the package is solved by splitting its forward movement such that instead of staying still throughout the loading time, and leaving the weighing area only once loading is over, the package is moved forward towards the exit without loading being stopped, in various stages, for instance three.

The part-forward movements are in this case defined by their length, being a third of the package width, and their timing, being a third of maximum package filling duration.

These space-time coordinates are used to accurately set the programming of the filling process with no uneven internal distribution of the bulk fruits, in respect of fruits of any class and packages of any kind.

Now obviously, all starting data defining the action program (maximum weight of a full package and tolerances thereof; part-forward movements of the package and timing thereof; selective feeding movements) are recorded in a random access memory interfacing with a microprocessor which receives information originating in both the load cell and other digital sensors (for instance, light-emitting scanners) to altogether make up the operational characteristics of the new automatic bulk fruit package weighing and filling process.

### BRIEF DESCRIPTION OF THE DRAWINGS

In order to provide a fuller description of the invention and contribute to the complete understanding of its formal, structural and operational characteristics, drawings are attached which schematically show different features of a preferred embodiment of the invention.

In the drawings:

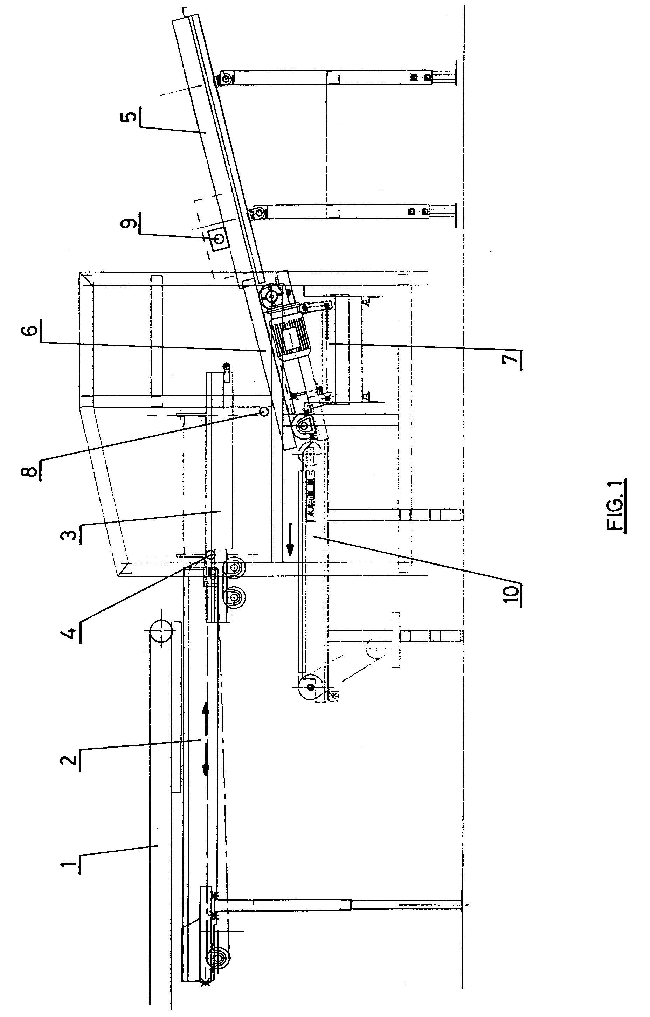

Figure 1 is a side elevation view of the entire machine, showing its structure and the layout of its constituent elements.
Figure 2 is a plan view of the group of filling conveyors, in this case comprising three flat parallel belts.

### DESCRIPTION OF A PREFERRED EMBODIMENT

In order to clearly show the nature and scope of the advantageous application of the machine subject of the invention, its structure and operation will be described hereinafter with reference to the drawings, which show a preferred embodiment of said object for informative purposes and should hence be construed in their broadest sense, and not used to limit the application and contents of this invention.

Now therefore, although the drawings show and a description is given of particular solutions to the partial problems posed by the practical embodiment of the invention (for instance fluid cylinders as actuating means, drives, etc.), such merely indicate a preferred choice, not so an exclusive possibility.

General bulk fruit feeding to the machine is carried out by a conveyor (1) delivering its load to a store (2), being another conveyor having a reversible movement, and thus normally feeding the filling conveyors (3) unless the light-emitting cell (4) detects that the conveyors (3) are saturated with fruits, because they have stopped or because feeding is excessive, whereupon movement is reversed and the fruits are returned to their source until the conveyors (3) are unloaded and the normal feeding movement recommences.

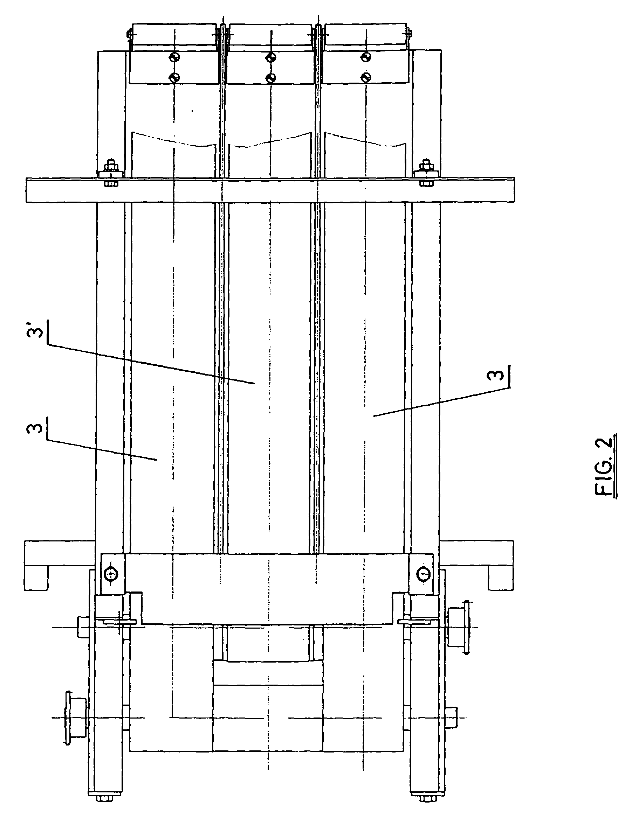

As shown in figure 2, a package lying in the loading and weighing area is filled by three parallel conveyor belts working simultaneously when the package begins to be filled, until a weight close to the maximum programmed weight is achieved therein, at which time the forward movement of the two lateral belts (3) is stopped whilst the central belt (3') continues its forward movement, until said programmed weight is accurately completed, within tolerances.

Empty packages are supplied by a conveyor (5) that delivers them to a conveyor (6) commanding their stepped movement onto the weighing means (7).

When the light-emitting scanner (8) detects the arrival of an empty package in the loading and weighing area, symmetrical package spacing stops (9) are actuated (for instance by pneumatic means) on either side of the conveyor (5) to stop the forward movement of the empty package feeding, by either appearing in front of the next package after the package being filled or clamping its opposite lateral walls.

When filling of the package is over, the weighing means (7) so advise the microprocessor, which commands the exit of the full package to the outgoing conveyor (10) whereupon the light-emitting cell (8) detects the absence of an empty package in the loading area, the stops (9) are opened and a new empty package enters such area, the cycle being resumed.

## Claims

1. An automatic bulk fruit package weighing-filling machine of the kind having empty packages fed to the bulk fruit filling and weighing area, computerised weighing means and exit of full packages in a continuous process commanded by a microprocessor, essentially **characterised** because bulk fruits are fed to the package being loaded by three parallel conveyors, working simultaneously until a weight close to the maximum programmed weight for every package is attained, whereupon the two end feeders stop moving and only the central feeder remains operational until the programmed weight is completed with the required accuracy.

2. An automatic bulk fruit package weighing-filling machine, as in claim 1, essentially **characterised** in that whilst filling and weighing an empty package, the package carries out various equal forward movements, broken by short pauses, preset as to length and duration in order that after the last pause the full package leaves the loading area, with the programmed weight and an even distribution of the bulk fruit within the package.
